# EUROPEAN PATENT APPLICATION

(11) **EP 4 770 097 A1**
(43) Date of publication of application: **01.07.2026**
(21) Application number: 24857812.2
(22) Date of filing: 30.04.2024
(51) Int. Cl.: H04N 19/85

(54) **FILM GRAIN PROCESSING METHOD AND APPARATUS, AND STORAGE MEDIUM**

(30) Priority: 30.08.2023 CN 202311128154
(71) Applicant: ZTE Corporation, Shenzhen, Guangdong 518057 (CN)
(72) Inventor: XIE, Shaowei, Shenzhen, Guangdong 518057 (CN); WU, Ping, Shenzhen, Guangdong 518057 (CN); GAO, Ying, Shenzhen, Guangdong 518057 (CN); HUANG, Cheng, Shenzhen, Guangdong 518057 (CN); BAI, Yaxian, Shenzhen, Guangdong 518057 (CN)
(74) Representative: Ziebig Hengelhaupt Intellectual Property Attorneys Patentanwaltskanzlei PartGmbB
(86) International application number: PCT/CN2024/090793
(87) International publication number: WO 2025/044262

(57) **Abstract**

The present disclosure relates to the technical field of image processing, and provides a film grain processing method and apparatus, and a storage medium, capable of simulating the visual effect of film grains more accurately and flexibly. The method comprising: acquiring a decoded image from a bitstream; acquiring a plurality of groups of film grain parameters and first indication information, wherein the first indication information is used for indicating a scheme of jointly using the plurality of groups of film grain parameters to add film grains to the decoded image; and adding film grains to the decoded image on the basis of the plurality of groups of film grain parameters and the first indication information.

## Description

This application claims priority of Chinese Patent Application No. 202311128154.4, filed on August 30, 2023, which is incorporated into this application by reference in its entirety.

### TECHNICAL FIELD

The present disclosure relates to the field of image processing technologies, and in particular, to a film grain processing method, a device, and a storage medium.

### BACKGROUND

Film grain technology is one of the technologies currently under discussion and research in international video coding and decoding standardization organizations. Film grain modeling and synthesis methods defined in different standards are not entirely same, and levels of support for film grain also vary.

Research in the related art has shown that film grain synthesized based on a single film grain model is coarse and inaccurate and exhibits an obvious repetitive template effect. For images with coarse-grained film grain, the synthesis processing process based on a single film grain model may encounter problems such as failure to start.

### SUMMARY

A film grain processing method, a device, and a storage medium that are provided in embodiments of the present disclosure may more accurately and flexibly simulate visual effects of film grain.

In an aspect, a film grain processing method is provided. The film grain processing method is applied to a decoding end, and includes:
acquiring a decoded image from a bitstream;
acquiring a plurality of sets of film grain parameters and first indication information, the first indication information being configured to indicate a scheme for adding film grain to the decoded image by jointly using the plurality of sets of film grain parameters; and
adding the film grain to the decoded image based on the plurality of sets of film grain parameters and the first indication information.

In another aspect, a film grain processing method is provided. The film grain processing method is applied to an encoding end, and includes:
acquiring a source image;
denoising the source image, to obtain a denoised image; and
determining, based on the source image and the denoised image, a plurality of sets of film grain parameters and first indication information, the first indication information being configured to indicate a scheme for adding film grain to a decoded image by jointly using the plurality of sets of film grain parameters.

In another aspect, a film grain processing device is provided. The film grain processing device is applied to a decoding end, and includes:
an acquiring module, configured to acquire a decoded image from a bitstream;
the acquiring module being further configured to acquire a plurality of sets of film grain parameters and first indication information; the first indication information being configured to indicate a scheme of adding film grain to the decoded image by jointly using the plurality of sets of film grain parameters; and
an adding module, configured to add the film grain to the decoded image based on the plurality of sets of film grain parameters and the first indication information.

In another aspect, a film grain processing device is provided. The film grain processing device is applied to an encoding end, and includes:
an acquiring module, configured to acquire a source image;
a processing module, configured to denoise the source image to obtain a denoised image; and
a determination module, configured to determine a plurality of sets of film grain parameters and first indication information based on the source image and the denoised image; the first indication information being configured to indicate a scheme for adding film grain to a decoded image by jointly using the plurality of sets of film grain parameters.

In yet another aspect, a communication device is provided. The communication device includes a memory and a processor. The memory is coupled to the processor. The memory is configured to store a computer program. Upon executing the computer program, the processor performs the film grain processing method as described in any one of the embodiments described above.

In yet another aspect, a computer readable storage medium is provided. The computer readable storage medium has stored computer program instructions. Upon the computer program instructions are executed by a processor, the computer program instructions perform the film grain processing method as described in any one of the embodiments described above.

In yet another aspect, a computer program product is provided. The computer program product includes computer program instructions. Upon the computer program instructions are executed by a processor, the computer program instructions perform the film grain processing method as described in any one of the embodiments described above.

The film grain processing method provided in the embodiments of the present disclosure may add film grain to a decoded image based on a plurality of sets of film grain parameters and a scheme for adding film grain to the decoded image by jointly using the plurality of sets of film grain parameters. In this way, compared with the methods in the related art that define only a single film grain model for film grain simulation in different standards or proprietary protocols of multiple manufacturers, the method provided in the embodiments of the present disclosure, which uses a plurality of sets of film grain parameters (corresponding to a plurality of film grain models) to simulate the complex film grain characteristics in video images, may achieve the purpose of more accurately and flexibly simulating visual effects of film grain, thereby bringing a better viewing experience to viewers.

Meanwhile, the method of synthesizing film grain based on the plurality of film grain models may improve the robustness in the film grain synthesis process, thereby avoiding problems such as the failure of the synthesis algorithm due to a high computational complexity of a single model.

### BRIEF DESCRIPTION OF THE DRAWINGS

In order to describe technical solutions in the present disclosure more clearly, the accompanying drawings to be used in some embodiments of the present disclosure will be introduced briefly below. However, the accompanying drawings to be described below are merely accompanying drawings of some embodiments of the present disclosure, and a person of ordinary skill in the art may obtain other drawings according to these drawings.
FIG. 1 is a first schematic diagram of an architecture of a coding and decoding system provided in some embodiments of the present disclosure;
FIG. 2 is a second schematic diagram of an architecture of a coding and decoding system provided in some embodiments of the present disclosure;
FIG. 3 is a third schematic diagram of an architecture of a coding and decoding system provided in some embodiments of the present disclosure;
FIG. 4 is a fourth schematic diagram of an architecture of a coding and decoding system provided in some embodiments of the present disclosure;
FIG. 5 is a first flow chart of a film grain processing method provided in some embodiments of the present disclosure;
FIG. 6 is a second flow chart of a film grain processing method provided in some embodiments of the present disclosure;
FIG. 7 is a third flow chart of a film grain processing method provided in some embodiments of the present disclosure;
FIG. 8 is a fourth flow chart of a film grain processing method provided in some embodiments of the present disclosure;
FIG. 9 is a fifth flow chart of a film grain processing method provided in some embodiments of the present disclosure;
FIG. 10 is a fifth schematic diagram of an architecture of a coding and decoding system provided in some embodiments of the present disclosure;
FIG. 11 is a first schematic diagram showing a structure of a film grain processing device provided in some embodiments of the present disclosure;
FIG. 12 is a second schematic diagram showing a structure of a film grain processing device provided in some embodiments of the present disclosure; and
FIG. 13 is a schematic diagram showing a structure of a communication device provided in some embodiments of the present disclosure.

### DETAILED DESCRIPTION

The technical solutions in the present disclosure will be described clearly and completely below with reference to the accompanying drawings in the present disclosure. However, the described embodiments are merely some but not all of embodiments of the present disclosure. All other embodiments obtained based on the embodiments of the present disclosure by a person of ordinary skill in the art without paying any creative effort will be included in the protection scope of the present disclosure.

It will be noted that, in the present disclosure, the term such as "exemplary" or "for example" is used to represent an example, illustration, or explanation. Any embodiment or design solution described with "exemplary" or "for example" in the present disclosure is not necessarily to be construed as preferred or advantageous over other embodiments or design solutions. Rather, the use of the term such as "exemplary" or "for example" is intended to present relevant concepts in a specific manner.

Hereinafter, the terms "first" and "second" are used for descriptive purposes only, and are not to be construed as indicating or implying a relative importance or implicitly indicating the number of indicated technical features. Thus, a feature defined with "first" or "second" may explicitly or implicitly include one or more of the features.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, A and B at the same time, and only B. In addition, the term such as "at least one" means one or more, and the term such as "a/the plurality of" means two or more.

Film grain is generated in physical processes of exposure and development of photographic film (exposure and development of silver halide crystals) and is widely present in film and television content. However, since digital sensors do not undergo these processes, digital sensors generate noise-free digital video without film grain. Many content creators, especially in the film industry, generally regard film grain as a pleasant noise that may enhance the natural appearance of video content. Therefore, reintroducing film grain back to video to improve the visual experience is often considered as part of the creative intention.

Since video image compression relies heavily on predictions of time domain, spatial domain, or cross-component domain while film grain is inherently random, it is difficult to encode film grain by using a typical video image encoding tool. To preserve film grain, a solution is to use a small quantization parameter during video compression, thereby preserving more details. However, for video applications such as adaptive streaming media and broadcasting, this solution requires a high bit rate. Another solution is to model film grain at an encoding end to obtain film grain parameters, and then generate film grain at a decoding end by using the film grain parameters and add film grain to the decoded video image. This may give full play to the potential of video image compression technology.

For example, the High Efficiency Video Coding (H.265/HEVC) standard and the Versatile Video Coding (H.266/VVC) standard series, developed by the Joint Video Experts Team (JVET) under the International Organization for Standardization (ISO)/the International Electrotechnical Commission (IEC) and the International Telecommunication Union (ITU), utilize film grain characteristic (FGC) and supplemental enhancement information (SEI) to indicate the film grain parameters used for synthesizing film grain during video or image data decoding and rendering, thereby achieving the preservation of film grain.

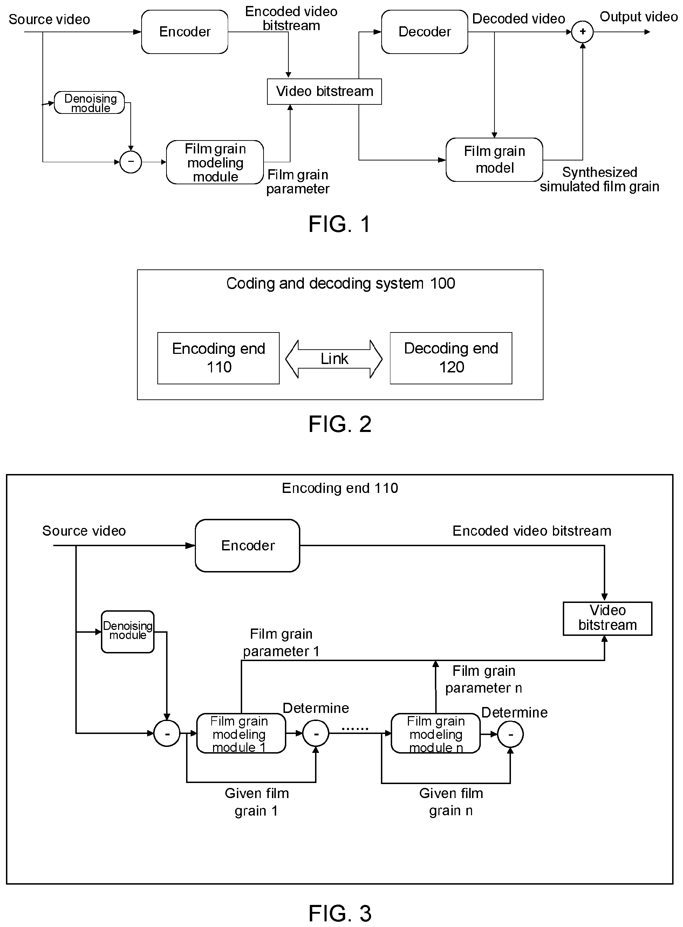

Referring to FIG. 1, FIG. 1 is a schematic diagram of an architecture of a coding and decoding system used in the video encoding and decoding standard developed by the JVET. As shown in FIG. 1, the system includes an encoding end and a decoding end.

The encoding end includes an encoder, a denoising module, and a film grain modeling module.

The encoder is configured to compress and encode an input source video to obtain an encoded video bitstream.

The denoising module is configured to preprocess and denoise the input source video to obtain a denoised video. The denoised video includes a video image sequence from which film grain is removed or attenuated.

The film grain modeling module is configured to parameterize a film grain model based on a difference between the denoised video and the source video, so as to obtain film grain parameters (i.e., parameter values of the film grain model).

The film grain parameters may be transmitted along with the encoded video bitstream to the decoding end; alternatively the film grain parameters may be transmitted to the decoding end through an external transmission manner.

The decoding end includes a decoder and a film grain model.

The decoder is configured to decode the input encoded video bitstream, to obtain a decoded video stream.

The film grain model is configured to synthesize simulated film grain based on the input film grain parameters.

Furthermore, a decoded and reconstructed video with simulated film grain may be obtained by adding parameters of simulated film grain to the decoded video stream.

In some embodiments, besides the architecture of the coding and decoding system shown in FIG. 1, there are other implementations of the architecture of the coding and decoding system, and the main difference lies in the encoding end. For example, instead of encoding the source video image sequence to obtain the encoded video bitstream, the encoding end may encode the denoised video image sequence to obtain the encoded video; alternatively, in a case where the source video does not include film grain, the encoding end may transmit predetermined film grain parameters to the decoding end for film grain synthesis, and in this case, even if the source video does not include film grain, film grain may be added to the video at the decoding end, to achieve a certain effect.

At the 29th JVET meeting, proposal JVET-AC0199 provided film grain quality evaluation results obtained from a frequency based method and an auto-regressive based method separately, and the results mention that:
(1) in a case where a source video has heavy film grain, synthesized film grain is coarse-grained and has obvious repetitive patterns;
(2) in a case where a source video has light/low film grain, synthesized film grain has a good effect; and
(3) a frequency-based film grain synthesis (FGS) method and an auto-regressive FGS method show different results in different conditions.

It may be seen that the FGS methods based on a single model have poor flexibility and accuracy, and the FGS methods are difficult to achieve satisfactory simulation effects for complex film grains.

For the technical problem described above, a film grain processing method is provided in embodiments of the present disclosure. The idea of the method is to add film grain to a decoded image based on a plurality of sets of film grain parameters and the joint use of the plurality of sets of film grain parameters. In this way, compared with the methods in the related art that define only a single film grain model for film grain simulation in different standards or proprietary protocols of multiple manufacturers, the method provided in the embodiments of the present disclosure, which uses a plurality of sets of film grain parameters (corresponding to a plurality of film grain models) to simulate the complex film grain characteristics in video images, may achieve the purpose of more accurately and flexibly simulating visual effects of film grain, thereby bringing a better viewing experience to viewers.

Meanwhile, the method of synthesizing film grain based on the plurality of film grain models may improve the robustness in the film grain synthesis process, thereby avoiding problems such as the failure of the synthesis algorithm due to a high computational complexity of a single model.

The coding and decoding system provided in the embodiments of the present disclosure will be described in details below with reference to the accompanying drawings of the specification.

Referring to FIG. 2, FIG. 2 is a schematic diagram of an architecture of a coding and decoding system provided in the embodiments of the present disclosure. As shown in FIG. 2, the coding and decoding system 100 includes an encoding end 110 and a decoding end 120.

The encoding end 110 generates an encoded video bitstream. Therefore, the encoding end 110 may be referred to as a video encoding device. The decoding end 120 may decode the encoded video bitstream generated by the encoding end. Therefore, the decoding end 120 may be referred to as a video decoding device. Embodiments of the encoding end 110, embodiments of the decoding end 120, or embodiments of the encoding end 110 and the decoding end 120 may include one or more processors and a memory coupled to the one or more processors. The memory may include, but is not limited to, a random access memory (RAM), a read-only memory (ROM), an electrically erasable programmable read-only memory (EEPROM), a flash memory, or any other medium capable of being used to store desired program codes in the form of instructions or data structures capable of being accessed by a computer, as described herein.

In some embodiments, the encoding end 110 and the decoding end 120 may include a variety of devices, including desktop computers, mobile computing devices, notebook computers (e.g., laptop computers), tablet computers, set-top boxes, handheld phones such as the "smart" phones, televisions, cameras, display devices, digital media players, video game consoles, in-vehicle computers, or the like.

In some embodiments, the decoding end 120 may receive the encoded video bitstream from the encoding end 110 through a link. The link may include one or more media or devices capable of transmitting the encoded video data from the encoding end to the decoding end 120. In an example, the link may include one or more communication media that enable the encoding end 110 to directly transmit the encoded video bitstream to the decoding end in real time. In this example, the encoding end 110 may modulate the encoded video bitstream according to a communication standard (e.g., a wireless communication protocol) and transmit the modulated video bitstream to the decoding end 120. The one or more communication media may include wireless and/or wired communication media, such as radio frequency (RF) spectrum or one or more physical transmission lines. The one or more communication media may form part of a packet-based network, such as a local area network, a wide area network, or a global network (e.g., the Internet). The one or more communication media may include routers, switches, base stations, or other devices that facilitate communication from the encoding end 110 to the decoding end 120.

In some embodiments, as shown in FIG. 3, the encoding end 110 includes an encoder, a denoising module and a plurality of film grain modeling modules.

The encoder is configured to compress and encode an input source video to obtain an encoded video bitstream.

The denoising module is configured to preprocess and denoise the input source video to obtain a denoised video. The denoised video includes a video image sequence from which film grain is removed or attenuated.

The film grain modeling module is configured to parameterize a film grain model, to obtain film grain parameters (i.e., parameter values of the film grain model). The plurality of film grain modeling modules may obtain a plurality of sets of film grain parameters.

The film grain parameters may be transmitted along with the encoded video bitstream to the decoding end 120; alternatively, the film grain parameters may be transmitted to the decoding end 120 through an external transmission manner.

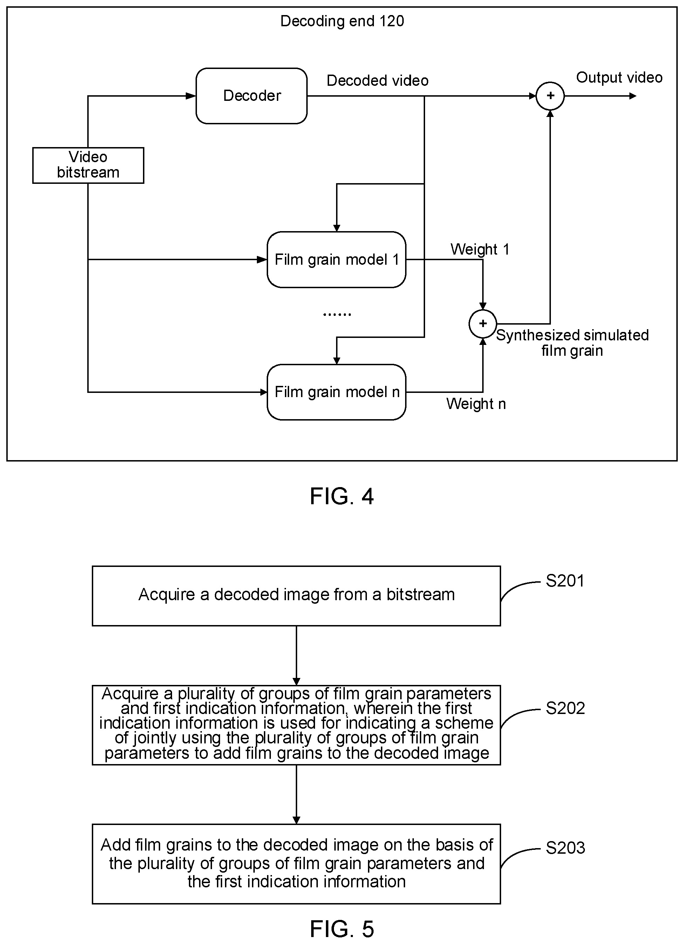

In some embodiments, as shown in FIG. 4, the decoding end 120 includes a decoder and a plurality of film grain models.

The decoder is configured to decode the input encoded video bitstream, to obtain a decoded video stream.

The film grain model is configured to synthesize simulated film grain based on the input film grain parameters. The plurality of film grain models are configured to synthesize a plurality of simulated film grains, respectively.

In some embodiments, the plurality of simulated film grains may be sequentially added to the decoded video stream, to obtain a decoded and reconstructed video with simulated film grain.

In some embodiments, the plurality of simulated film grain parameters may be fused according to preset weights, to obtain a fused film grain. The fused film grain is added to the decoded video stream, to obtain a decoded and reconstructed video with simulated film grain.

It may be understood that the embodiments of the present disclosure do not limit the application scenarios. The system architecture and service scenario described in the embodiments of the present disclosure are provided to more clearly explain the technical solutions of the embodiments of the present disclosure, and do not constitute a limitation on the technical solutions provided in the embodiments of the present disclosure. Those ordinary skilled in the art may know that with the evolution of the network architectures and the emergence of new service scenarios, the technical solutions provided in the embodiments of the present disclosure are also applicable to similar technical problems.

The film grain processing method provided in the embodiments of the present disclosure will be described in detail below.

Based on the decoding end 120 shown in FIG. 4, a film grain processing method is further provided in the present disclosure. As shown in FIG. 5, FIG. 5 is a flow chart of a film grain processing method provided in the present disclosure. This film grain processing method may be performed by the decoding end 120, and the method includes the following steps.

In S201, a decoded image is acquired from a bitstream.

A data rate refers to data traffic used by a video file per unit of time, and is also referred to as a bit rate. For example, the bitstream may include an image bitstream or a transport stream or media file that includes the image bitstream.

In some embodiments, the step S201 may be implemented as follows: the decoded image may be acquired by decoding the bitstream. For example, the decoding method may be the methods specified in the video decoding standards, and the embodiments of the present disclosure are not limited thereto.

For example, the decoded image may include at least one of: an image sequence consisting of a plurality of consecutive frames of images, a single image, a frame of an image in an image sequence, or a partial image region in a frame of an image.

It may understood that, considering the randomness and diversity of film grain effects in video images, the film grain processing method provided in the embodiments of the present disclosure may be adaptively applied to an image sequence, a single image, or a partial image region in a frame of an image. For example, film grain in a complete image sequence may be synthesized by a single film grain model or a plurality of film grain models. The number of used film grain models may depend on the complexity of the film grain, the simulation effect of the model, the computational complexity of the model, etc. In summary, the method of synthesizing film grain by jointly using the plurality of film grain models is a reliable and effective solution for more accurately and flexibly simulating visual effects of real film grain.

In some embodiments, the bitstream includes a first SEI message, and the first SEI message includes at least one of: first indication information, second indication information, third indication information, fourth indication information, and a plurality of sets of film grain parameters. The second indication information is configured to indicate whether adding film grain based on a plurality of film grain models is supported. The third indication information is configured to indicate whether persistence of the previous first SEI message is cancelled. The fourth indication information is configured to indicate whether the current first SEI message has persistence. It may understood that, the plurality of sets of film grain parameters may be stored in the same SEI message.

In some other embodiments, the bitstream includes a plurality of second SEI messages, and each second SEI message includes a set of film grain parameters. It may understood that, the plurality of sets of film grain parameters may be stored in different SEI messages.

The bitstream further includes a first SEI message, and the first SEI message includes at least one of: first indication information, second indication information, third indication information, fourth indication information, a plurality of pieces of fifth indication information, and a plurality of pieces of sixth indication information. The second indication information is configured to indicate whether adding film grain based on a plurality of film grain models is supported. The third indication information is configured to indicate whether persistence of the previous first SEI message is cancelled. The fourth indication information is configured to indicate whether the current first SEI message has persistence. Each piece of fifth indication information is configured to indicate whether the second SEI message corresponding to the piece of fifth indication information is included in the first SEI message. Each piece of sixth indication information is configured to indicate a processing order of the second SEI message corresponding to the piece of sixth indication information.

In S202, a plurality of sets of film grain parameters and first indication information are acquired. The first indication information is configured to indicate a scheme for adding film grain to the decoded image by jointly using the plurality of sets of film grain parameters.

In some embodiments, the plurality of sets of film grain parameters and the first indication information may be included in the bitstream; alternatively, the plurality of sets of film grain parameters may be pre-configured parameters, and the first indication information may be pre-configured indication information.

In some embodiments, each set of film grain parameters of the plurality of sets of film grain parameters includes at least one of: a film grain model parameter and a film grain processing parameter.

The film grain model parameter may include a film grain model identifier. The film grain processing parameter is a set of film grain processing parameters corresponding to a film grain synthesis method indicated by the film grain model parameter. For example, the film grain synthesis method may be a method defined by any public standard or proprietary protocol, and the embodiments of the present disclosure are not limited thereto.

Optionally, the film grain processing parameter may also be referred to as a film grain synthesis parameter or a film grain modeling parameter.

For example, in a case where the film grain model identifier indicates that a frequency-filtering-based film grain synthesis method is used, the film grain processing parameter may include a luminance bit depth parameter (fg_bit_depth_luma_minus8) of film grain, a chroma bit depth parameter (fg_bit_depth_chroma_minus8) of film grain, an image color gamut (fg_colour_primaries) corresponding to film grain, a color space (fg_matric_coeffs) corresponding to film grain, a transfer function (fg_transfer_characteristics) corresponding to film grain, a blending mode parameter (fg_blending_mode_id) between the film grain and the decoded image, a film grain scaling parameter (fg_log2_scale_factor), a model number parameter (fg_num_model_values_minus1[c]) of the film grain for intensity intervals of different color components, and a model values (fg_comp_model_value[c][i][j]) of the film grain corresponding to intensity intervals of different color components.

In some embodiments, the plurality of sets of film grain parameters further include the number of film grain models. For example, the number of film grain models included in the N sets of film grain parameters is N, and N is an integer greater than or equal to 1.

In some embodiments, the first indication information includes at least one of: a joint scheme of a plurality of film grain models, an importance level of each of a plurality of film grain models, and a mode for adding film grain to the decoded image.

In some embodiments, the joint scheme of the plurality of film grain models includes a first scheme and/or a second scheme.

The first scheme includes: generating, based on each set of film grain parameters, a film grain corresponding to the each set of film grain parameters; and then adding the film grains corresponding to the plurality of sets of film grain parameters to the decoded image.

For example, it is assumed that the plurality of sets of film grain parameters include: a first set of film grain parameters and a second set of film grain parameters. In this case, a film grain 1 is generated based on the first set of film grain parameters; a film grain 2 is generated based on the second set of film grain parameters; and then the film grain 1 and the film grain 2 are added to the decoded image.

The second scheme includes: generating, based on each set of film grain parameters, a film grain corresponding to the each set of film grain parameters; fusing the film grains corresponding to the plurality of sets of film grain parameters, to obtain a fused film grain; and adding the fused film grain to the decoded image.

The method for fusing the film grains corresponding to the plurality of sets of film grain parameters may adopt an additive mode, a multiplicative mode, or any other calculation mode.

For example, it is assumed that the plurality of sets of film grain parameters include: a first set of film grain parameters and a second set of film grain parameters. In this case, a film grain 1 is generated based on the first set of film grain parameters; a film grain 2 is generated based on the second set of film grain parameters; then the film grain 1 and the film grain 2 are fused to obtain a fused film grain; and next the fused film grain is added to the decoded image.

In some embodiments, the importance level of each of the plurality of film grain models refers to a weight coefficient of the film grain generated by each film grain model in the joint scheme.

In some embodiments, the mode for adding film grain to the decoded image may be an additive mode, a multiplicative mode, or any other calculation mode.

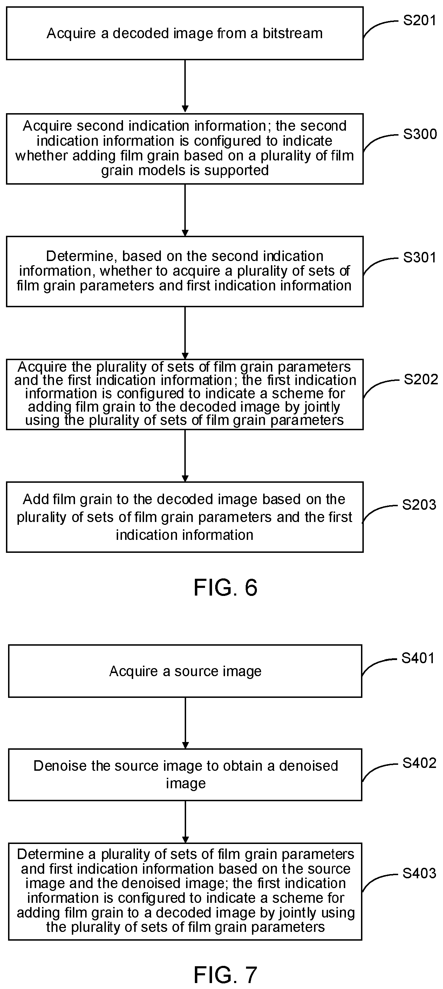

In some embodiments, as shown in FIG. 6, before the step S202, the method may further include the following steps S300 and S301.

In S300, second indication information is acquired. The second indication information is configured to indicate whether adding film grain based on a plurality of film grain models is supported.

As a possible implementation, the second indication information is included in a video parameter set (VPS) and configured to indicate whether the video corresponding to the VPS supports adding film grain based on the plurality of film grain models.

As another possible implementation, the second indication information is included in a sequence parameter set (SPS) and configured to indicate whether the image sequence corresponding to the SPS supports adding film grain based on the plurality of film grain models.

As another possible implementation, the second indication information is included in a picture parameter set (PPS) and configured to indicate whether a frame of the decoded image corresponding to the PPS supports adding film grain based on the plurality of film grain models.

As another possible implementation, the second indication information is included in an adaptation parameter set (APS) and configured to indicate whether a frame of the decoded image corresponding to the APS supports adding film grain based on the plurality of film grain models.

As another possible implementation, the second indication information is included in a supplemental enhancement information (SEI) message and configured to indicate whether a frame of the decoded image corresponding to the SEI message supports adding film grain based on the plurality of film grain models.

In S301, it is determined, based on the second indication information, whether to acquire the plurality of sets of film grain parameters and the first indication information.

In some embodiments, in a case where the second indication information is configured to indicate that adding film grain based on the plurality of film grain models is supported, the plurality of sets of film grain parameters and the first indication information are acquired. In a case where the second indication information is configured to indicate that adding film grain based on the plurality of film grain models is not supported, the plurality of sets of film grain parameters and the first indication information are not acquired, furthermore, a single film grain model may be used to add film grain.

It will be noted that the execution order shown in FIG. 6 is only an example and does not constitute a limitation to the film grain processing method provided in the embodiments of the present disclosure. The embodiments of the present disclosure do not limit an execution order of the step S201 and steps S300 and S301. For example, the step S201 may be performed first, followed by the steps S300 and S301; alternatively, the steps S300 and S301 may be performed first, followed by the step S201; alternatively, the step S201 and steps S300 and S301 may be performed simultaneously.

In S203, film grain is added to the decoded image based on the plurality of sets of film grain parameters and the first indication information.

In some embodiments, the step S203 may be implemented as the following steps.

In step a1, a plurality of film grains corresponding to the decoded image are generated based on the plurality of sets of film grain parameters.

In some embodiments, the film grain corresponding to the decoded image is generated based on the film grain model parameter and film grain processing parameter included in each set of film grain parameters.

It will be noted that a set of film grain parameters corresponds to a film grain model, and the plurality of film grain models may be mutually independent or have a dependency relationship.

For example, processing processes of the plurality of film grain models may be parallel. For example, the plurality of film grain models may simultaneously synthesize their corresponding film grains without any limitation on the order.

For example, a processing order of the plurality of film grain models may also be serial. For example, the plurality of film grain models have a preset processing order, and the plurality of specified film grain models are required to be applied sequentially to achieve the desired film grain synthesis effect.

In step a2, the plurality of film grains are added to the decoded image based on the first indication information.

In some embodiments, film grain is added to the decoded image based on the joint scheme of the plurality of film grain models, the importance level of each of the plurality of film grain models, and the mode for adding film grain to the decoded image.

For example, in a case where two film grain models are applied to the same image and processing processes of the two film grain models are parallel, a film grain 1 may be generated based on a film grain model 1, and a film grain 2 may be generated based on a film grain model 2. Then, a weight coefficient of the film grain 1 is determined based on an importance level of the film grain model 1, and a weight coefficient of the film grain 2 is determined based on an importance level of the film grain model 2. Finally, fusion is performed based on the film grain 1, the weight coefficient of the film grain 1, the film grain 2, and the weight coefficient of the film grain 2 by means of a weighted summation mode, to obtain a fused film grain, and the fused film grain is added to the decoded image.

Furthermore, the method for adding film grains synthesized by the plurality of film grain models to the decoded image may adopt an additive mode, a multiplicative mode, or any other calculation mode. Alternatively, the method for adding film grains synthesized by the plurality of film grain models to the decoded image may adopt a blending mode composed of a plurality of calculation modes.

It may be understood that the film grain processing method provided in the embodiments of the present disclosure may add film grain to the decoded image based on the plurality of sets of film grain parameters and the scheme for adding film grain to the decoded image by jointly using the plurality of sets of film grain parameters. In this way, compared with the methods in the related art that define only a single film grain model for film grain simulation in different standards or proprietary protocols of multiple manufacturers, the method provided in the embodiments of the present disclosure, which uses the plurality of sets of film grain parameters (corresponding to the plurality of film grain models) to simulate the complex film grain characteristics in video images, may achieve the purpose of more accurately and flexibly simulating visual effects of film grain, thereby bringing a better viewing experience to viewers.

Meanwhile, the method of synthesizing film grain based on the plurality of film grain models may improve the robustness in the film grain synthesis process, thereby avoiding problems such as the failure of the synthesis algorithm due to a high computational complexity of a single model.

Based on the encoding end 110 shown in FIG. 3, a film grain processing method is further provided in the embodiments of the present disclosure. As shown in FIG. 7, FIG. 7 is a flow chart of a film grain processing method provided in the present disclosure. The film grain processing method may be performed by the encoding end 110, and the method includes the following steps.

In S401, a source image is acquired.

For example, the source image may be an image sequence consisting of a plurality of consecutive frames of images, a single image, a frame of an image in an image sequence, or a partial image region in a frame of an image.

In S402, the source image is denoised to obtain a denoised image.

The denoised image is an image from which film grain is removed or attenuated.

For example, the denoising process may be a spatial domain denoising method, a transform domain denoising method, or a spatial domain and transform domain joint filtering method, and the embodiments of the present disclosure are not limited thereto.

In S403, a plurality of sets of film grain parameters and first indication information are determined based on the source image and the denoised image. The first indication information is configured to indicate a scheme for adding film grain to the decoded image by jointly using the plurality of sets of film grain parameters.

In some embodiments, each set of film grain parameters of the plurality of sets of film grain parameters includes at least one of: a film grain model parameter and a film grain processing parameter.

In some embodiments, the plurality of sets of film grain parameters further include the number of film grain models.

In some embodiments, the first indication information includes at least one of: a joint scheme of a plurality of film grain models, an importance level of each of a plurality of film grain models, and a mode for adding film grain to the decoded image.

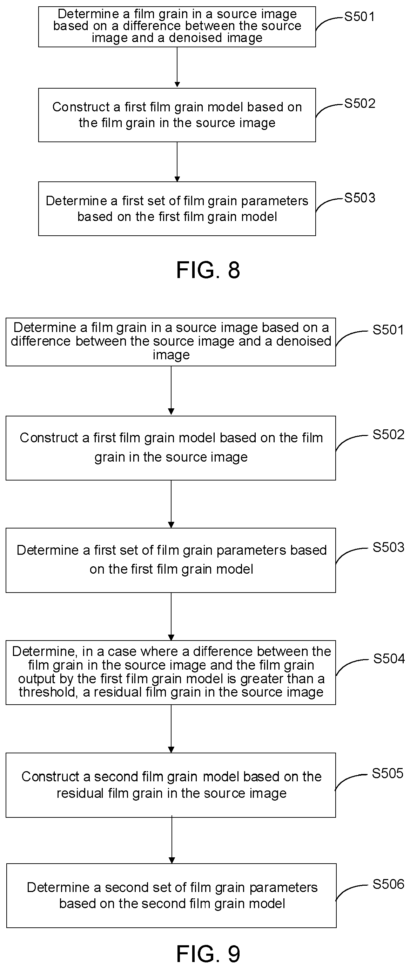

In some embodiments, the plurality of sets of film grain parameters at least include a first set of film grain parameters. As shown in FIG. 8, the first set of film grain parameters may be determined through the following steps.

In S501, a film grain in the source image is determined based on a difference between the source image and the denoised image.

For example, the difference between the source image and the denoised image may be reflected by a difference value between corresponding pixels in the source image and the denoised image.

In S502, a first film grain model is constructed based on the film grain in the source image.

In some embodiments, the step S502 may be implemented as the following: the first film grain model is constructed based on the film grain in the source image and a preset film grain modeling method.

For example, the preset film grain modeling method may be a frequency-based film grain modeling method or a film grain modeling method based on an auto-regressive coefficient.

In some embodiments, the first film grain model is constructed based on a film grain characteristic of the source image. For example, the film grain characteristic includes, but is not limited to, a film grain intensity, a film grain scaling parameter.

The film grain characteristic may be a film grain characteristic of the entire source image, or film grain characteristics of different regions in the source image.

In S503, a first set of film grain parameters is determined based on the first film grain model.

For example, film grain parameterization is performed on the first film grain model, so that the first set of film grain parameters is obtained.

In some embodiments, the plurality of sets of film grain parameters at least include a second set of film grain parameters. As shown in FIG. 9, the second set of film grain parameters may be determined through the following steps.

In S504, in a case where a difference between the film grain in the source image and the film grain output by the first film grain model is greater than a threshold, a residual film grain in the source image is determined.

It may be understood that, in a case where the difference between the film grain in the source image and the film grain output by the first film grain model is greater than the threshold, it means that the first film grain model cannot accurately simulate the film grain in the source image. Therefore, it is necessary to construct a plurality of film grain models to achieve the purpose of more accurately and flexibly simulating visual effects of film grain.

In some embodiments, the residual film grain in the source image may be determined based on the difference between the film grain in the source image and the film grain output by the first film grain model.

In S505, a second film grain model is constructed based on the residual film grain in the source image.

In some embodiments, the second film grain model is constructed based on a film grain characteristic of the residual film grain.

In S506, a second set of film grain parameters is determined based on the second film grain model.

For example, film grain parameterization is performed on the second film grain model, so that the second set of film grain parameters is obtained.

In some embodiments, after the step S506, the method further includes: determining whether the first film grain model and the second film grain model are capable of accurately simulating the film grain in the source image. In a case where the first film grain model and the second film grain model cannot accurately simulate the film grain in the source image, the method may further include: constructing a third film grain model, and then performing a cyclic determination iteratively until the constructed film grain models are capable of accurately simulating the film grain in the source image.

It may be understood that the number of film grain models is not limited in the embodiments of the present disclosure. In a case where the constructed film grain models cannot accurately simulate the film grain in the source image, one or more film grain models may also be constructed again.

In some embodiments, the method further includes: sending second indication information to a decoding end. The second indication information is configured to indicate whether adding film grain based on the plurality of film grain models is supported.

As a possible implementation, after the step S403, the method further includes: sending a bitstream to the decoding end. The bitstream includes encoding information of the source image, a plurality of sets of film grain parameters, and first indication information.

It may be understood that, the encoding information of the source image, the plurality of sets of film grain parameters, and the first indication information may be written into the bitstream and transmitted along with the bitstream to the decoding end, so that channel resources may be saved.

As another possible implementation, after the step S403, the method further includes: sending a bitstream, a plurality of sets of film grain parameters and first indication information to the decoding end. The bitstream includes encoding information of the source image.

It may be understood that, the bitstream, the encoding information of the source image, the plurality of sets of film grain parameters, and the first indication information may be sent separately, so that independent scheduling may be achieved.

It will be noted that there are a variety of methods for encoding images to generate bitstreams, such as the methods specified in the H.26x series standards, and the embodiments of the present disclosure are not limited thereto.

For ease of understanding, the film grain processing method applied to the encoding end is described below by way of examples.

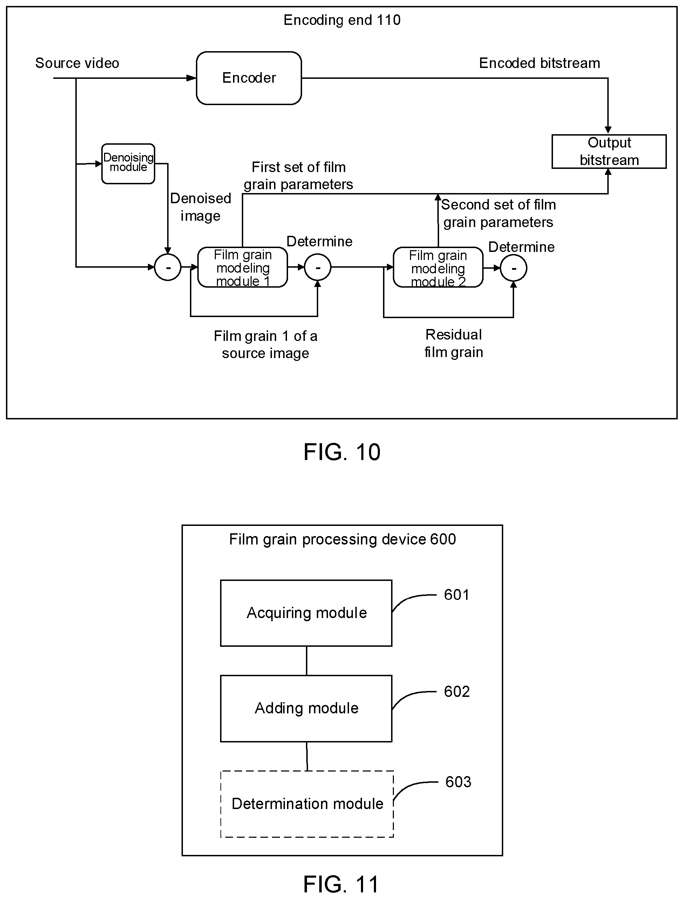

For example, as shown in FIG. 10, the film grain processing method applied to the encoding end may be implemented as the following steps.

In step b1, a film grain 1 in the source image is obtained based on a difference between the source image and the denoised image.

In step b2, the first film grain modeling is performed based on a film grain characteristic of the film grain 1, so as to obtain a film grain model 1.

In step b3, a first set of film grain parameters is determined based on the film grain model 1.

In step b4, it is determined whether the film grain model 1 is capable of accurately simulating the film grain in the source image.

For example, in a case where a difference between the film grain in the source image and the film grain simulated by the film grain model 1 is greater than a preset threshold, it is determined that the film grain model 1 cannot accurately simulate the film grain in the source image.

In step b5, in a case where the film grain model 1 cannot accurately simulate the film grain in the source image, a residual film grain in the source image is determined based on the difference between the film grain in the source image and the film grain simulated by the film grain model 1.

In step b6, the second film grain modeling is performed based on the residual film grain in the source image, so as to obtain a film grain model 2.

In step b7, a second set of film grain parameters is determined based on the film grain model 2.

In step b8, in a case where the film grain model 2 is capable of accurately simulating the film grain in the source image, modeling is stopped, the first set of film grain parameters, the second set of film grain parameters, and the first indication information are written into a bitstream, and the bitstream is output.

For ease of understanding, the information interaction between the encoding end and the decoding end in the embodiments of the present disclosure is described by considering the SEI message as an example.

In an example 1, the plurality of sets of film grain parameters are stored in the same SEI message.

In some embodiments, the bitstream includes a first SEI message. The first SEI message includes at least one of: first indication information, second indication information, third indication information, fourth indication information, and a plurality of sets of film grain parameters.

The first indication information is configured to indicate a scheme for adding film grain to the decoded image by jointly using the plurality of sets of film grain parameters. The second indication information is configured to indicate whether adding film grain based on a plurality of film grain models is supported. The third indication information is configured to indicate whether persistence of the previous first SEI message is cancelled. The fourth indication information is configured to indicate whether the current first SEI message has persistence.

For example, a syntax of the first SEI message is shown in Table 1 below.

**Table 1**

| | |
|---|---|
| film_grain_multi_model (payloadSize) { | Descriptor |
| fg_multi_model_cancel_flag | u(1) |
| if(!fg_multi_model_cancel_flag) { | |
| fg_multi_model_flag | u(1) |
| fg_multi_model_persistence_flag | u(1) |
| if(fg_multi_model_flag) { | |
| fg_multi_model_num_minus1 | u(4) |
| for(i = 0; i <= fg_multi_model_num_minus1; i++) { | |
| fg_model_parameters() | |
| fg_model_weight_factor | |
| } | |
| fg_multi_model_joint_mode_id | u(2) |
| fg_multi_model_blending_mode_id | u(2) |
| } | |
| } | |
| } | |

For example, the first indication information may be carried in a model weight factor (fg_model_weight_factor) field, a multi-model joint mode identifier (fg_multi_model_joint_mode_id) field, and a multi-model blending mode identifier (fg_multi_model_blending_mode_id) field.

The fg_model_weight_factor indicates an importance level of each of a plurality of film grain models used in the bitstream associated with the film grain multi-model SEI message. Optionally, the importance level of each film grain model may be a weight coefficient of the film grain generated by each film grain model in the joint scheme.

The fg_multi_model_joint_mode_id indicates a joint scheme of a plurality of film grain models. For example, the joint scheme of the plurality of film grain models includes a first scheme and/or a second scheme, and details will not be repeated herein.

The fg_multi_model_blending_mode_id indicates a mode for adding film grain to the decoded image. For example, the mode for adding film grain to the decoded image may include an additive mode, a multiplicative mode, or any other calculation mode.

For example, the second indication information may be carried in a multi-model flag (fg_multi_model_flag). In a case where a value of the fg_multi_model_flag is equal to 1, it indicates that the bitstream associated with the SEI message supports adding film grain based on the plurality of film grain models. In a case where the value of the fg_multi_model_flag is equal to 0, it indicates that the bitstream associated with the SEI message does not support adding film grain based on the plurality of film grain models, that is, the bitstream to be decoded associated with the SEI message supports only one film grain model.

For example, the third indication information may be carried in a multi-model cancellation flag (fg_multi_model_cancel_flag). In a case where a value of the fg_multi_model_cancel_flag is equal to 1, it means that the film grain multi-model SEI message cancels the persistence of any previous film grain multi-model SEI messages and disables the relevant SEI function. Conversely, in a case where the value of the fg_multi_model_cancel_flag is equal to 0, it means that the information following the SEI message is film grain multi-model information.

For example, the fourth indication information may be carried in a multi-model persistence flag (fg_multi_model_persistence_flag) and configured to indicate the persistence of the current film grain multi-model SEI message. In a case where a value of the fg_multi_model_persistence_flag is equal to 0, it indicates that the current film grain multi-model SEI message applies to only the current decoded image (or sub-image). In a case where the value of the fg_multi_model_persistence_flag is equal to 1, it indicates that the film grain multi-model SEI message applies not only to the current decoded image (or sub-image) but also continuously to subsequent decoded images (or sub-images) within a persistence scope (peisistence_scope).

For example, the persistence scope (peisistence_scope) of the film grain multi-model SEI message may be an access unit (AU), a coded video sequence (CVS), or unspecified, and the embodiments of the present disclosure are not specifically limited thereto.

For example, the plurality of sets of film grain parameters may be carried in a multi-model number flag (fg_multi_model_num_minus1) and film grain parameters (fg_model_parameters).

For the fg_multi_model_num_minus1, this field after incremented by 1 is configured to indicate the number of film grain models used in the bitstream associated with the film grain multi-model SEI message.

The fg_model_parameters indicates each set of film grain parameters used in the bitstream associated with the film grain multi-model SEI message.

The film grain parameters include a film grain model parameter and a film grain processing parameter. Optionally, the film grain parameters may indicate the film grain parameters defined in the film grain characteristic SEI message in the H.274 standard or the film grain parameters defined in the video compression coding standard (e.g., AOMedia Video1, AV1) launched by the Alliance for Open Media (AOMedia).

In an example 2, the SEI message is based on an SEI processing order.

In some other embodiments, the bitstream includes a plurality of second SEI messages, and each second SEI message includes a set of film grain parameters. It may be understood that, in the embodiments of the present disclosure, the plurality of sets of film grain parameters for synthesizing film grain may be stored in separate SEI messages, and the SEI messages indicating the synthesis of film grain may be processed sequentially according to a preset SEI processing order, so that the joint synthesis scheme of the plurality of film grain models may be achieved.

The method for storing a single set of film grain parameters in an SEI message may adopt any public standard or proprietary protocol, and the embodiments of the present disclosure are not limited thereto.

In some embodiments, the bitstream further includes a first SEI message. The first SEI message includes at least one of: first indication information, second indication information, third indication information, fourth indication information, a plurality of pieces of fifth indication information, and a plurality of pieces of sixth indication information.

The first indication information is configured to indicate a scheme for adding film grain to the decoded image by jointly using a plurality of sets of film grain parameters. The second indication information is configured to indicate whether adding film grain based on a plurality of film grain models is supported. The third indication information is configured to indicate whether persistence of the previous first SEI message is cancelled. The fourth indication information is configured to indicate whether the current first SEI message has persistence. Each piece of fifth indication information is configured to indicate whether the second SEI message corresponding to the piece of fifth indication information is included in the first SEI message. Each piece of sixth indication information is configured to indicate a processing order of the second SEI message corresponding to the piece of sixth indication information.

For example, a syntax of the first SEI message is shown in Table 2 below.

**Table 2**

| | |
|---|---|
| film_grain_multi_model (payloadSize) { | Descriptor |
| fg_multi_model_num_minus1 | u(4) |
| for(i = 0; i <= fg_multi_model_num_minus1; i++) { | |
| fg_model_sei_wrapping_flag[i] | u(1) |
| if(fg_model_sei_wrapping_flag[i]) { | |
| reserved_alignment_6bits | u(6) |
| fg_model_sei_message() | |
| } else { | |
| fg_model_sei_prefix_flag[i] | u(1) |
| fg_model_sei_payload_type[i] | u(13) |
| if(fg_model_sei_prefix_flag[i]) { | |
| fg_model_num_prefix_bytes[i] | b(8) |
| for(j = 0; j < fg_model_num_prefix_bytes[i]; j++) | |
| fg_model_prefix_byte[i][j] | b(8) |
| } | |
| } | |
| fg_model_sei_processing_order[i] | u(8) |
| fg_model_weight_factor[i] | |
| } | |
| } | |

Herein, the fg_multi_model_num_minus1 is a multi-model number flag, and this field after incremented by 1 is configured to indicate the number of film grain models used in the bitstream associated with the film grain multi-model SEI message. Each SEI message configured to indicate the synthesis of film grain may correspond to a film grain model, that is, to a set of film grain parameters.

For example, the fg_model_sei_wrapping_flag[i] (i.e., the i-th piece of fifth indication information) is configured to indicate whether the i-th second SEI message corresponding to the i-th piece of fifth indication information is included in the first SEI message. In a case where a value of the fg_model_sei_wrapping_flag[i] is equal to 1, it indicates that the i-th second SEI message corresponding to the i-th piece of fifth indication information is included in the first SEI message, that is, the set of film grain parameters is included in the corresponding fg_model_sei_message(). In a case where the value of the fg_model_sei_wrapping_flag[i] is equal to 0, it indicates that the i-th second SEI message corresponding to the i-th piece of fifth indication information is located outside the first SEI message, that is, the SEI message storing the set of film grain parameters will be indexed based on fields such as fg_model_sei_prefix_flag[i], fg_model_sei_payload_type[i], fg_model_num_prefix_bytes[i], and fg_model_prefix_byte[i][j].

For example, the fg_model_sei_processing_order[i] (i.e., the i-th piece of sixth indication information) is configured to indicate a processing order of the i-th second SEI message corresponding to the i-th piece of sixth indication information.

For example, the fg_model_weight_factor[i] is configured to indicate an importance level of the i-th second SEI message. For example, the importance level of the i-th second SEI message may be represented by an importance level of each film grain model used by the bitstream associated with the i-th second SEI message. Optionally, the importance level of each film grain model may be a weight coefficient of the film grain generated by each film grain model in the joint scheme.

It will be noted that in a case where the first indication information does not include the fg_model_weight_factor, that is, in a case where there is no difference in weight coefficients or importance levels among the plurality of film grain models, the purpose of joint synthesis processing for the plurality of film grain models may also be achieved by directly using the SEI processing order and SEI message defined by the JVET standardization organizations.

It may be understood that the field information shown in Table 2 may be freely combined or appropriately adjusted according to specific application scenarios.

For example, referring to the Table 1, the first SEI message may also include: a multi-model cancellation flag (fg_multi_model_cancel_flag) carrying the third indication information and a multi-model persistence flag (fg_multi_model_persistence_flag) carrying the fourth indication information.

In a case where a value of the fg_multi_model_cancel_flag is equal to 1, it means that the film grain multi-model SEI message cancels the persistence of any previous film grain multi-model SEI messages and disables the relevant SEI function. Conversely, in a case where the value of the fg_multi_model_cancel_flag is equal to 0, it means that the information following the SEI message is film grain multi-model information.

In a case where a value of the fg_multi_model_persistence_flag is equal to 0, it indicates that the current film grain multi-model SEI message applies to only the current decoded image (or sub-image). In a case where the value of the fg_multi_model_persistence_flag is equal to 1, it indicates that the film grain multi-model SEI message applies not only to the current decoded image (or sub-image) but also continuously to subsequent decoded images (or sub-images) within a persistence scope (peisistence_scope).

The solutions in the embodiments of the present disclosure are mainly described above from the perspective of methods. It may be understood that, in order to achieve the functions described above, the film grain processing device includes at least one of corresponding hardware structures and software modules for performing a variety of functions. Those skilled in the art will easily realize that the embodiments of the present disclosure may be implemented in the form of hardware or a combination of hardware and computer software, with reference to the units and the algorithm steps of the plurality of examples described in the embodiments of the present disclosure. Whether a certain function is performed by hardware or computer software-driven hardware depends on the specific application and design constraints of the technical solutions. Professional technicians may use different methods to implement the described functions, for each specific application, but such implementation will not be considered beyond the scope of the embodiments of the present disclosure.

It may be understood that, in order to achieve the functions described above, the film grain processing device includes corresponding hardware structures and/or software modules for performing a variety of functions. Those skilled in the art will easily realize that the present disclosure may be implemented in the form of hardware or a combination of hardware and computer software, with reference to the algorithm steps of the plurality of examples described in the embodiments of the present disclosure. Whether a certain function is performed by hardware or computer software-driven hardware depends on the specific application and design constraints of the technical solutions. Professional technicians may use different methods to implement the described functions, for each specific application, but such implementation will not be considered beyond the scope of the present disclosure.

In the embodiments of the present disclosure, the film grain processing device may be divided into functional modules according to the method embodiments described above. For example, each functional module may be divided corresponding to each function, or two or more functions may be integrated into one functional module. The integrated module described above may be implemented in the form of hardware or in the form of software. It will be noted that the division of modules in the embodiments of the present disclosure is illustrative, and is merely a kind of logical functional division, and there may be other division manners in actual implementations. The description is given below by considering an example in which each functional module is divided corresponding to each function.

FIG. 11 is a schematic diagram showing a structure of a film grain processing device provided in the embodiments of the present disclosure. The film grain processing device is applied to the decoding end and may perform the film grain processing method provided in the method embodiments described above. As shown in FIG. 11, the film grain processing device 600 includes an acquiring module 601 and an adding module 602. In some other embodiments, the film grain processing device 600 further includes a determination module 603.

The acquiring module 601 is configured to acquire a decoded image from a bitstream.

The acquiring module 601 is further configured to acquire a plurality of sets of film grain parameters and first indication information. The first indication information is configured to indicate a scheme of adding film grain to the decoded image by jointly using a plurality of sets of film grain parameters.

The adding module 602 is configured to add film grain to the decoded image based on the plurality of sets of film grain parameters and the first indication information.

In some embodiments, each set of film grain parameters of the plurality of sets of film grain parameters includes at least one of: a film grain model parameter and a film grain processing parameter.

In some embodiments, the plurality of sets of film grain parameters further include the number of film grain models.

In some embodiments, the first indication information includes at least one of: a joint scheme of a plurality of film grain models, an importance level of each of a plurality of film grain models, and a mode for adding film grain to the decoded image.

In some embodiments, the joint scheme of the plurality of film grain models includes a first scheme and/or a second scheme.

In some embodiments, the first scheme includes: generating, based on each set of film grain parameters, a film grain corresponding to the each set of film grain parameters; and adding the film grains corresponding to the plurality of sets of film grain parameters to the decoded image.

In some embodiments, the second scheme includes: generating, based on each set of film grain parameters, a film grain corresponding to the each set of film grain parameters; fusing the film grains corresponding to the plurality of sets of film grain parameters, to obtain a fused film grain; and adding the fused film grain to the decoded image.

In some embodiments, the acquiring module 601 is further configured to acquire second indication information before acquiring the plurality of sets of film grain parameters and the first indication information. The second indication information is configured to indicate whether adding film grain based on a plurality of film grain models is supported. The determination module 603 is configured to determine, based on the second indication information, whether the plurality of sets of film grain parameters and the first indication information are acquired.

In some embodiments, the second indication information is included in a video parameter set (VPS) and configured to indicate whether the video corresponding to the VPS supports adding film grain based on the plurality of film grain models; alternatively, the second indication information is included in a sequence parameter set (SPS) and configured to indicate whether the image sequence corresponding to the SPS supports adding film grain based on the plurality of film grain models; alternatively, the second indication information is included in a picture parameter set (PPS) and configured to indicate whether a frame of the decoded image corresponding to the PPS supports adding film grain based on the plurality of film grain models; alternatively, the second indication information is included in an adaptation parameter set (APS) and configured to indicate whether a frame of the decoded image corresponding to the APS supports adding film grain based on the plurality of film grain models; alternatively, the second indication information is included in a supplemental enhancement information (SEI) message and configured to indicate whether a frame of the decoded image corresponding to the SEI message supports adding film grain based on the plurality of film grain models.

In some embodiments, the bitstream includes a first SEI message, and the first SEI message includes at least one of: first indication information, second indication information, third indication information, fourth indication information, and a plurality of sets of film grain parameters. The second indication information is configured to indicate whether adding film grain based on the plurality of film grain models is supported. The third indication information is configured to indicate whether the persistence of the previous first SEI message is cancelled. The fourth indication information is configured to indicate whether the current first SEI message has persistence.

In some embodiments, the bitstream includes a plurality of second SEI messages, and each second SEI message includes a set of film grain parameters.

In some embodiments, the bitstream further includes a first SEI message, and the first SEI message includes at least one of: first indication information, second indication information, third indication information, fourth indication information, a plurality of pieces of fifth indication information, and a plurality of pieces of sixth indication information. The second indication information is configured to indicate whether adding film grain based on the plurality of film grain models is supported. The third indication information is configured to indicate whether the persistence of the previous first SEI message is cancelled. The fourth indication information is configured to indicate whether the current first SEI message has persistence. Each piece of fifth indication information is configured to indicate whether the second SEI message corresponding to the piece of fifth indication information is included in the first SEI message. Each piece of sixth indication information is configured to indicate a processing order of the second SEI message corresponding to the piece of sixth indication information.

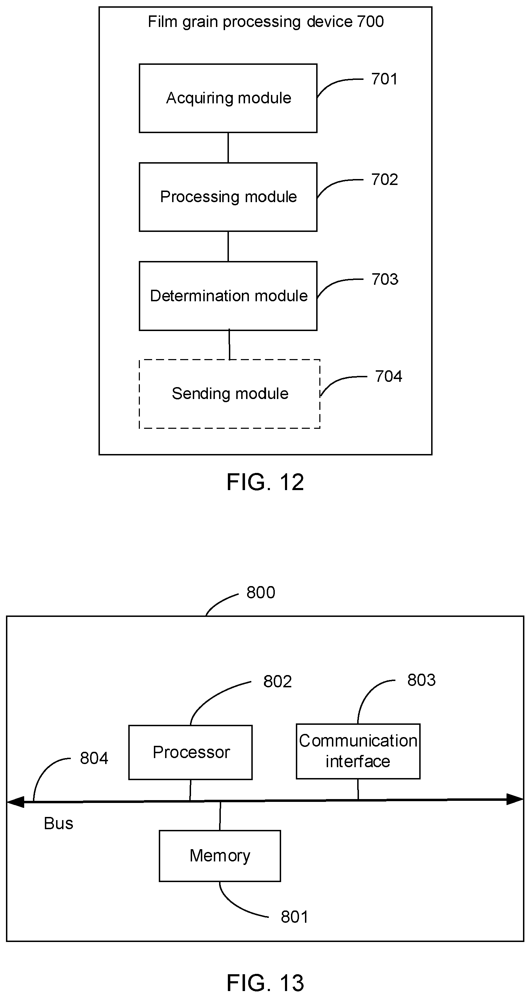

FIG. 12 is a schematic diagram showing a structure of another film grain processing device provided in the embodiments of the present disclosure. The film grain processing device is applied to the encoding end and may perform the film grain processing method provided in the method embodiments described above. As shown in FIG. 12, the film grain processing device 700 includes: an acquiring module 701, a processing module 702 and a determination module 703. In some other embodiments, the film grain processing device 700 further includes a sending module 704.

The acquiring module 701 is configured to acquire a source image.

The processing module 702 is configured to denoise the source image, to obtain a denoised image.

The determination module 703 is configured to determine a plurality of sets of film grain parameters and first indication information based on the source image and the denoised image. The first indication information is configured to indicate a scheme for adding film grain to the decoded image by jointly using the plurality of sets of film grain parameters.

In some embodiments, the sending module 704 is configured to send a bitstream to the decoding end. The bitstream includes encoding information of the source image, a plurality of sets of film grain parameters, and first indication information.

In some embodiments, the sending module 704 is further configured to send a bitstream, a plurality of sets of film grain parameters, and first indication information to the decoding end. The bitstream includes encoding information of the source image.

In some embodiments, each set of film grain parameters of the plurality of sets of film grain parameters includes at least one of: a film grain model parameter and a film grain processing parameter.

In some embodiments, the plurality of sets of film grain parameters further include the number of film grain models.

In some embodiments, the plurality of sets of film grain parameters at least include a first set of film grain parameters. The first set of film grain parameters may be determined by: determining a film grain in the source image based on a difference between the source image and the denoised image; constructing a first film grain model based on the film grain in the source image; and determining the first set of film grain parameters based on the first film grain model.

In some embodiments, the plurality of sets of film grain parameters further include a second set of film grain parameters. The determination module 703 is further configured to: determine, in a case where a difference between the film grain in the source image and the film grain output by the first film grain model is greater than a threshold, a residual film grain in the source image; construct a second film grain model based on the residual film grain in the source image; and determine a second set of film grain parameters based on the second film grain model.

In some embodiments, the first indication information includes at least one of: a joint scheme of a plurality of film grain models, an importance level of each of a plurality of film grain models, and a mode for adding film grain to the decoded image.

In some embodiments, the sending module 704 is further configured to send a second indication information to the decoding end. The second indication information is configured to indicate whether adding film grain based on a plurality of film grain models is supported.

In some embodiments, the second indication information is included in a video parameter set (VPS) and configured to indicate whether the video corresponding to the VPS supports adding film grain based on the plurality of film grain models; alternatively, the second indication information is included in a sequence parameter set (SPS) and configured to indicate whether the image sequence corresponding to the SPS supports adding film grain based on the plurality of film grain models; alternatively, the second indication information is included in a picture parameter set (PPS) and configured to indicate whether a frame of the decoded image corresponding to the PPS supports adding film grain based on the plurality of film grain models; alternatively, the second indication information is included in an adaptation parameter set (APS) and configured to indicate whether a frame of the decoded image corresponding to the APS supports adding film grain based on the plurality of film grain models; alternatively, the second indication information is included in a supplemental enhancement information (SEI) message and configured to indicate whether a frame of the decoded image corresponding to the SEI message supports adding film grain based on the plurality of film grain models.

In some embodiments, the bitstream includes a first SEI message, and the first SEI message includes at least one of: first indication information, second indication information, third indication information, fourth indication information, and a plurality of sets of film grain parameters. The second indication information is configured to indicate whether adding film grain based on the plurality of film grain models is supported. The third indication information is configured to indicate whether the persistence of the previous first SEI message is cancelled. The fourth indication information is configured to indicate whether the current first SEI message has persistence.

In some embodiments, the bitstream includes a plurality of second SEI messages, and each second SEI message includes a set of film grain parameters.

In some embodiments, the bitstream further includes a first SEI message, and the first SEI message includes at least one of: first indication information, second indication information, third indication information, fourth indication information, a plurality of pieces of fifth indication information, and a plurality of pieces of sixth indication information. The second indication information is configured to indicate whether adding film grain based on the plurality of film grain models is supported. The third indication information is configured to indicate whether the persistence of the previous first SEI message is cancelled. The fourth indication information is configured to indicate whether the current first SEI message has persistence. Each piece of fifth indication information is configured to indicate whether the second SEI message corresponding to the piece of fifth indication information is included in the first SEI message. Each piece of sixth indication information is configured to indicate a processing order of the second SEI message corresponding to the piece of sixth indication information.

In a case where the functions of the integrated modules are implemented in the form of hardware, a possible structure of a communication device involved in the embodiments described above is provided in the embodiments of the present disclosure. As shown in FIG. 13, the communication device 800 includes: a processor 802 and a bus 804. Optionally, the communication device may further include a memory 801. Optionally, the communication device 800 may further include a communication interface 803.

The processor 802 may implement or execute a variety of exemplary logical blocks, modules and circuits described with reference to the embodiments of the present disclosure. The processor 802 may be a central processing unit, a general-purpose processor, a digital signal processor, an application specific integrated circuit, a field programmable gate array or any other programmable logic device, a transistor logic device, a hardware component, or any combination thereof. The processor 802 may implement or execute a variety of exemplary logical blocks, modules and circuits described with reference to the embodiments of the present disclosure. The processor 802 may also be a combination that implements computing functions, for example, a combination of one or more microprocessors, or a combination of a digital signal processor (DSP) and a microprocessor.

The communication interface 803 is configured to connect to other devices through a communication network. The communication network may be an Ethernet, a wireless access network, a wireless local area network (WLAN), or the like.

The memory 801 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

In a possible implementation, the memory 801 may exist independently of the processor 802, and the memory 801 may be connected to the processor 802 through the bus 804 and used for storing instructions or program codes. When calling and executing the instructions or program codes stored in the memory 801, the processor 802 may perform the film grain processing method provided in the embodiments of the present disclosure. In another possible implementation, the memory 801 may also be integrated with the processor 802.

The bus 804 may be an extended industry standard architecture (EISA) bus, or the like. The bus 804 may be classified as an address bus, a data bus, and a control bus. For ease of representation, only one bold line is used in FIG. 13, but it does not mean that there is only one bus or one type of bus.

A computer readable storage medium (e.g., a non-transitory computer readable storage medium) is provided in some embodiments of the present disclosure. The computer readable storage medium has stored computer program instructions. When the computer program instructions are run on a computer, the computer is enabled to perform the film grain processing method as described in any one of the embodiments described above.

For example, the computer readable storage medium may include, but is not limited to: a magnetic storage device (e.g., a hard disk, a floppy disk, or a magnetic tape), an optical disk (e.g., a compact disk (CD)), a digital versatile disk (DVD), a smart card and a flash memory device (e.g., an erasable programmable read-only memory (EPROM), a card, a stick or a key driver). The computer readable storage media described in the present disclosure may represent one or more devices and/or other machine-readable storage media for storing information. The term "machine-readable storage medium" may include, but is not limited to, wireless channels and a variety of other media capable of storing, containing, and/or carrying instructions and/or data.

A computer program product including instructions is provided in the embodiments of the present disclosure. When the computer program product is run on a computer, the computer is enabled to perform the film grain processing method as described in any one of the embodiments described above.

The above are merely specific implementations of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A film grain processing method, applied to a decoding end, the method comprising:
acquiring a decoded image from a bitstream;
acquiring a plurality of sets of film grain parameters and first indication information, wherein the first indication information is configured to indicate a scheme for adding film grain to the decoded image by jointly using the plurality of sets of film grain parameters; and
adding the film grain to the decoded image based on the plurality of sets of film grain parameters and the first indication information.

2. The method according to claim 1, wherein each set of film grain parameters of the plurality of sets of film grain parameters includes at least one of: a film grain model parameter and a film grain processing parameter.

3. The method according to claim 2, wherein the plurality of sets of film grain parameters further include a number of film grain models.

4. The method according to claim 1, wherein the first indication information includes at least one of: a joint scheme of a plurality of film grain models, an importance level of each of the plurality of film grain models, and a mode for adding the film grain to the decoded image.

5. The method according to claim 4, wherein the joint scheme of the plurality of film grain models includes a first scheme and/or a second scheme.

6. The method according to claim 5, wherein the first scheme includes:
generating, based on each set of film grain parameters, a film grain corresponding to the each set of film grain parameters; and
adding the film grains corresponding to the plurality of sets of film grain parameters to the decoded image.

7. The method according to claim 5, wherein the second scheme includes:
generating, based on each set of film grain parameters, a film grain corresponding to the each set of film grain parameters;
fusing the film grains corresponding to the plurality of sets of film grain parameters, to obtain a fused film grain; and
adding the fused film grain to the decoded image.

8. The method according to claim 1, wherein before the plurality of sets of film grain parameters and the first indication information are acquired, the method further comprises:
acquiring second indication information, wherein the second indication information is configured to indicate whether adding the film grain based on a plurality of film grain models is supported; and
determining, based on the second indication information, whether to acquire the plurality of sets of film grain parameters and the first indication information.

9. The method according to claim 8, wherein
the second indication information is included in a video parameter set (VPS), and is configured to indicate whether a video corresponding to the VPS supports adding the film grain based on the plurality of film grain models; or
the second indication information is included in a sequence parameter set (SPS), and is configured to indicate whether an image sequence corresponding to the SPS supports adding the film grain based on the plurality of film grain models; or
the second indication information is included in a picture parameter set (PPS), and is configured to indicate whether a frame of a decoded image corresponding to the PPS supports adding the film grain based on the plurality of film grain models; or
the second indication information is included in an adaptation parameter set (APS), and is configured to indicate whether a frame of a decoded image corresponding to the APS supports adding the film grain based on the plurality of film grain models; or
the second indication information is included in a supplemental enhancement information (SEI) message, and is configured to indicate whether a frame of a decoded image corresponding to the SEI message supports adding the film grain based on the plurality of film grain models.

10. The method according to claim 1, wherein the bitstream includes a first SEI message, the first SEI message includes at least one of: the first indication information, second indication information, third indication information, fourth indication information, and the plurality of sets of film grain parameters; wherein the second indication information is configured to indicate whether adding the film grain based on a plurality of film grain models is supported; the third indication information is configured to indicate whether persistence of a previous first SEI message is cancelled; and the fourth indication information is configured to indicate whether a current first SEI message has persistence.

11. The method according to claim 1, wherein the bitstream includes a plurality of second SEI messages, and each second SEI message includes a set of film grain parameters.

12. The method according to claim 11, wherein the bitstream further includes a first SEI message, the first SEI message includes at least one of: the first indication information, second indication information, third indication information, fourth indication information, a plurality of pieces of fifth indication information, and a plurality of pieces of sixth indication information; wherein the second indication information is configured to indicate whether the film grain is supported based on a plurality of film grain models; the third indication information is configured to indicate whether persistence of a previous first SEI message is cancelled; the fourth indication information is configured to indicate whether a current first SEI message has persistence; each piece of fifth indication information is configured to indicate whether a second SEI message corresponding to the piece of fifth indication information is included in the first SEI message; and each piece of sixth indication information is configured to indicate a processing order of a second SEI message corresponding to the piece of sixth indication information.

13. A film grain processing method, applied to an encoding end, the method comprising:
acquiring a source image;
denoising the source image, to obtain a denoised image; and
determining, based on the source image and the denoised image, a plurality of sets of film grain parameters and first indication information, wherein the first indication information is configured to indicate a scheme for adding film grain to a decoded image by jointly using the plurality of sets of film grain parameters.

14. The method according to claim 13, further comprising:
sending a bitstream to a decoding end, wherein the bitstream includes encoding information of the source image, the plurality of sets of film grain parameters, and the first indication information.

15. The method according to claim 13, further comprising:
sending a bitstream, the plurality of sets of film grain parameters, and the first indication information to a decoding end, wherein the bitstream includes encoding information of the source image.

16. The method according to claim 13, wherein each set of film grain parameters of the plurality of sets of film grain parameters includes at least one of: a film grain model parameter and a film grain processing parameter.

17. The method according to claim 16, wherein the plurality of sets of film grain parameters further include a number of film grain models.

18. The method according to claim 13, wherein the plurality of sets of film grain parameters at least include a first set of film grain parameters, and the first set of film grain parameters is capable of being determined by:
determining a film grain in the source image based on a difference between the source image and the denoised image;
constructing a first film grain model based on the film grain in the source image; and
determining the first set of film grain parameters based on the first film grain model.

19. The method according to claim 18, wherein the plurality of sets of film grain parameters further include a second set of film grain parameters, and the second set of film grain parameters is determined by:
determining, in a case where a difference between the film grain in the source image and a film grain output by the first film grain model is greater than a threshold, a residual film grain in the source image;
constructing a second film grain model based on the residual film grain in the source image; and
determining the second set of film grain parameters based on the second film grain model.

20. The method according to claim 13, wherein the first indication information includes at least one of: a joint scheme of a plurality of film grain models, an importance level of each of the plurality of film grain models, and a mode for adding the film grain to the decoded image.

21. The method according to claim 13, further comprising:
sending second indication information to a decoding end, wherein the second indication information is configured to indicate whether adding the film grain based on a plurality of film grain models is supported.

22. The method according to claim 21, wherein the second indication information is included in a video parameter set (VPS), and is configured to indicate whether a video corresponding to the VPS supports adding the film grain based on the plurality of film grain models; or
the second indication information is included in a sequence parameter set (SPS), and is configured to indicate whether an image sequence corresponding to the SPS supports adding the film grain based on the plurality of film grain models; or
the second indication information is included in a picture parameter set (PPS), and is configured to indicate whether a frame of a decoded image corresponding to the PPS supports adding the film grain based on the plurality of film grain models; or
the second indication information is included in an adaptation parameter set (APS), and is configured to indicate whether a frame of a decoded image corresponding to the APS supports adding the film grain based on the plurality of film grain models; or
the second indication information is included in a supplemental enhancement information (SEI) message, and is configured to indicate whether a frame of a decoded image corresponding to the SEI message supports adding the film grain based on the plurality of film grain models.

23. The method according to claim 14, wherein the bitstream includes a first SEI message, the first SEI message includes at least one of: the first indication information, second indication information, third indication information, fourth indication information, and the plurality of sets of film grain parameters; wherein the second indication information is configured to indicate whether adding the film grain based on a plurality of film grain models is supported; the third indication information is configured to indicate whether persistence of a previous first SEI message is cancelled; and the fourth indication information is configured to indicate whether a current first SEI message has persistence.

24. The method according to claim 14, wherein the bitstream includes a plurality of second SEI messages, and each second SEI message includes a set of film grain parameters.

25. The method according to claim 24, wherein the bitstream further includes a first SEI message, the first SEI message includes at least one of: the first indication information, second indication information, third indication information, fourth indication information, a plurality of pieces of fifth indication information, and a plurality of pieces of sixth indication information; wherein the second indication information is configured to indicate whether the film grain is supported based on a plurality of film grain models; the third indication information is configured to indicate whether persistence of a previous first SEI message is cancelled; the fourth indication information is configured to indicate whether a current first SEI message has persistence; each piece of fifth indication information is configured to indicate whether a second SEI message corresponding to the piece of fifth indication information is included in the first SEI message; and each piece of sixth indication information is configured to indicate a processing order of a second SEI message corresponding to the piece of sixth indication information.

26. A communication device, comprising: a memory and a processor; wherein the memory is coupled to the processor; the memory is configured to store instructions executable by the processor; upon executing the instructions, the processor performs the film grain processing method according to any one of claims 1 to 25.

27. A computer readable storage medium, wherein the computer readable storage medium has stored computer instructions that, upon run on an electronic device, enable the electronic device to perform the film grain processing method according to any one of claims 1 to 25.
